# EUROPÄISCHE PATENTANMELDUNG

(11) **EP 3 623 884 A1**
(43) Veröffentlichungstag der Anmeldung: **18.03.2020**
(21) Anmeldenummer: 18193975.2
(22) Anmeldetag: 12.09.2018
(51) Int. Cl.: G05B 19/4069, G05B 19/418

(54) **PRODUKTIONS- ODER WERKZEUGMASCHINE UND VERFAHREN ZUM BETRIEB EINER PRODUKTIONS- ODER WERKZEUGMASCHINE**

(71) Anmelder: Siemens Aktiengesellschaft, 80333 München (DE)
(72) Erfinder: Männer, Andres, 09236 Claußnitz OT Diethensdorf (DE)

(57) **Zusammenfassung**

Die Erfindung ist eine Produktions- oder Werkzeugmaschine (10) sowie ein Verfahren zum Betrieb einer Produktions- oder Werkzeugmaschine (10) mit zumindest einer Steuerungskomponente (12) und einem der zumindest einen Steuerungskomponente (12) zugeordneten digitalen Zwilling (32), wobei der digitale Zwilling (32) mit der Steuerungskomponente (12) datentechnisch verbindbar und beim Betrieb datentechnisch verbunden ist, wobei der digitale Zwilling (32) Zugriff auf eine interne Datenstruktur (52) der Steuerungskomponente (12) hat, wobei die Datenstruktur (52) Softwareobjekte (54) umfasst, welche an die Produktions- oder Werkzeugmaschine (10) angeschlossene Komponenten (20) repräsentieren und wobei der digitale Zwilling (32) ebenfalls schreibenden und/oder lesenden Zugriff auf von solchen Softwareobjekten (54) umfasste Daten hat.

## Beschreibung

Die Erfindung betrifft eine Produktions- oder Werkzeugmaschine sowie ein Verfahren zum Betrieb einer Produktions- oder Werkzeugmaschine.

Solche Maschinen (Produktions- oder Werkzeugmaschinen) sind an sich bekannt. Solche Maschinen sind jeweils ein komplexer Zusammenschluss verschiedener logischer und physischer Komponenten mit diversitärer Multiplizität.

Im Rahmen von Industry 4.0 und dem sogenannten Internet der Dinge (Internet of Things; IoT) ist ein möglichst umfassender Zugriff auf Daten und speziell auch auf interne Daten solcher Maschinen wünschenswert.

Grundsätzlich besteht die Möglichkeit, einen solchen Zugriff mittels entsprechender Kommunikationsschnittstellen zu ermöglichen. Dadurch ergibt sich aber die Gefahr von Sicherheitslücken und die Integration zusätzlicher Kommunikationsschnittstellen in die Funktionalität der jeweiligen Maschine oder einer einzelnen Komponente ist mit erheblichem Aufwand verbunden. Schließlich schafft die Zurverfügungstellung einer zusätzlichen Kommunikationsschnittstelle nicht ohne Weiteres Zugriffsmöglichkeiten zum Beispiel auf interne Regelungsdaten oder Echtzeitdaten der jeweiligen Maschine.

Eine Aufgabe der vorliegenden Erfindung besteht entsprechend darin, eine Maschine (Produktions- oder Werkzeugmaschine) der eingangs genannten Art sowie ein Verfahren zu deren Betrieb anzugeben, bei der bzw. bei dem ein solcher Zugriff möglich ist. Gleichzeitig soll aber ein unberechtigter und/oder unsachgemäßer Zugriff auf Daten einer solchen Maschine verhindert werden.

Erfindungsgemäß wird diese Aufgabe mittels einer Maschine (Produktions- oder Werkzeugmaschine) mit den Merkmalen des Anspruchs 1 gelöst. Dazu ist vorgesehen, dass die Maschine zumindest eine (grundsätzlich an sich bekannte) Steuerungskomponente umfasst und dass der Steuerungskomponente oder zumindest einer Steuerungskomponente der Maschine ein digitaler Zwilling zugeordnet ist. Dieser digitale Zwilling ist mit der oder der jeweiligen Steuerungskomponente datentechnisch verbindbar und beim Betrieb der Maschine mit der oder der jeweiligen Steuerungskomponente datentechnisch verbunden. Im Rahmen der datentechnischen Verbindung hat der digitale Zwilling zumindest Zugriff auf eine interne Datenstruktur der Steuerungskomponente, nämlich eine Datenstruktur, welche unmittelbar oder mittelbar Softwareobjekte umfasst, welche wiederum an die Maschine angeschlossene Komponenten repräsentieren. Zu den repräsentierten Komponenten gehören zum Beispiel Antriebe, Sensoren und dergleichen. Im Rahmen des Zugriffs auf die interne Datenstruktur der Steuerungskomponente hat der digitale Zwilling schreibenden und/oder lesenden Zugriff auf die Datenstruktur und von solchen Softwareobjekten umfasste Daten.

Die hier vorgeschlagene Neuerung kommt für Werkzeugmaschinen und allgemein für achsbasierte Maschinen in Betracht. Als Werkzeugmaschine werden bekanntlich alle Maschinen bezeichnet, die unter anderem im Maschinenbau und im Werkzeugbau zur Bearbeitung von Bauteilen (Werkstücken) mit Werkzeugen dienen und zur Bewegung des jeweiligen Werkzeugs eine Mehrzahl von Maschinenachsen aufweisen. Zu den Werkzeugmaschinen gehören auch sogenannte NC- oder CNC-Maschinen. Ein Industrieroboter ist bekanntlich eine universelle, programmierbare Maschine mit einer Mehrzahl von Maschinenachsen, die neben einer Bearbeitung von Bauteilen alternativ auch zur Handhabung von Werkstücken und für Montagezwecke bestimmt und eingerichtet ist. Ein Industrieroboter ist ein Beispiel für eine hier als Produktionsmaschine bezeichnete allgemeine Bearbeitungsmaschine. Eine Werkzeugmaschine ist ein Beispiel für eine spezielle Bearbeitungsmaschine. Zwecks Erfassung aller Möglichkeiten von achsbasierten Maschinen, die zum Be- oder Verarbeiten von Bauteilen, deren Handhabung und Transport oder zum Beispiel zur maßgenauen Platzierung in Relation zu zumindest einem weiteren Bauteil bestimmt und eingerichtet sind, wird hier und im Folgenden von Produktions- oder Werkzeugmaschinen und mitunter kurz von Maschinen gesprochen.

Der Vorteil der Neuerung besteht darin, dass der virtuelle digitale Zwilling der oder einer Steuerungskomponente der jeweiligen realen Maschine (Produktions- oder Werkzeugmaschine) ohne weiteres Zutun in den Komponentenverbund dieser Maschine integriert ist. Der digitale Zwilling interagiert mit den Komponenten der Maschine wie eine reale und berechtigte Steuerungskomponente und wird insoweit von diesen als berechtigte Steuerungskomponente wahrgenommen. Der digitale Zwilling ermöglicht somit den Zugriff auch auf interne Daten - die oben erwähnte Datenstruktur -, insbesondere auf davon umfasste maschinenspezifische Datenstrukturen, der jeweiligen Maschine.

Ein weiterer Vorteil der hier vorgeschlagenen Neuerung besteht darin, dass aus Sicht der Konfiguration der jeweiligen Maschine (Produktions- oder Werkzeugmaschine) durch Integration eines digitalen Zwillings der oder einer Steuerungskomponente keine Komponente integriert wird, die von der Maschine als neue Komponente (weitere Steuerungskomponente) "wahrgenommen" wird. Der integrierte digitale Zwilling wird von den sonstigen Komponenten der jeweiligen Maschine gar nicht als digitaler Zwilling wahrgenommen (weil für diese Komponenten kein Unterschied zwischen dem digitalen Zwilling und der von dem digitalen Zwilling repräsentierten Steuerungskomponente erkennbar ist). Der digitale Zwilling ist damit unmittelbar in das Sicherheitskonzept der jeweiligen Maschine integriert. Der digitale Zwilling ist damit ebenfalls in die interne Kommunikation der sonstigen Maschinenkomponenten (Steuerungskomponente, Antriebe, Sensoren, PLC etc.) integriert. Durch die Integration hat der digitale Zwilling unmittelbar Zugriff auch auf maschineninterne Daten. Schließlich besteht ein wesentlicher Vorteil noch darin, dass eine Integration eines solchen digitalen Zwillings auch bei bereits installierten Maschinen (Produktions- oder Werkzeugmaschinen) ohne die Notwendigkeit einer Neukonfiguration der jeweiligen Maschine möglich ist, denn durch die "bloße" Integration eines von der Maschine als Steuerungskomponente, nämlich als weitere Steuerungskomponente, wahrgenommenen digitalen Zwillings bleibt die bisherige Konfiguration der jeweiligen Maschine erhalten.

Bezüglich eines Verfahrens zum Betrieb einer Maschine der eingangs genannten Art wird die o.g. Aufgabe erfindungsgemäß mittels eines Verfahrens mit den Merkmalen des parallelen Verfahrensanspruchs gelöst. Dabei ist vorgesehen, dass der digitale Zwilling zum Beispiel als Schnittstelle zwischen der jeweiligen Steuerungskomponente und zusätzlichen Applikationen, wie zum Beispiel IoT-Applikationen (Internet of Things-Applikationen), fungiert. Diese können mittels des digitalen Zwillings auf die Steuerungskomponente und eine dortige jeweilige Datenstruktur zugreifen. In Form solcher Applikationen lassen sich nachinstallierbare Funktionserweiterungen für eine jeweilige Maschine (Produktions- oder Werkzeugmaschine) realisieren, welche die Ressourcen der Maschine nicht oder zumindest kaum belasten, jedoch agieren können, als wären sie direkt auf der jeweiligen Maschine installiert. Dadurch wird ebenfalls eine Anbindung einer jeweiligen Maschine (Produktions- oder Werkzeugmaschine) an die sogenannte Cloud und eine dortige Cloud-Plattform möglich.

Nach dem hier vorgeschlagenen Ansatz ist im Rahmen eines solchen Verfahrens zum Betrieb einer Maschine (Produktions- oder Werkzeugmaschine) der hier und im Folgenden beschriebenen Art vorgesehen, dass mittels des digitalen Zwillings eine Funktion aus einer Menge der nachfolgend aufgeführten Funktionen ausgeführt wird. Die Ausführbarkeit der einzelnen Funktionen oder auch mehrerer Funktionen basiert darauf, dass der digitale Zwilling schreibenden und/oder lesenden Zugriff auf die im Speicher der Steuerungskomponente vorgehaltene Datenstruktur, die davon umfassten Softwareobjekte und deren Daten hat. Eine jede der nachfolgend aufgeführten Funktionen kann zum Beispiel als eine mit dem digitalen Zwilling zusammenwirkende (auf den digitalen Zwilling zugreifende; den digitalen Zwilling als Mittel zum Zugriff auf die Datenstruktur der jeweiligen Steuerungskomponente nutzende) Applikation, insbesondere eine IoT-Applikation, ausgeführt sein. Im Einzelnen:

Mittels eines lesenden Zugriffs auf die Datenstruktur (im Speicher der jeweiligen Steuerungskomponente), auf zumindest einzelne davon umfasste Softwareobjekte und/oder wiederum davon umfasste Daten können Daten an einem grundsätzlich beliebigen, insbesondere entfernten Ort, zum Beispiel in der Cloud, gesammelt und dort zum Beispiel in einer Datenbasis, insbesondere in Form einer sogenannten Zeitreihe oder mehrerer Zeitreihen, gespeichert werden und werden im Rahmen des Betriebs der jeweiligen Maschine sowie im Rahmen der Ausführung des digitalen Zwillings gesammelt bzw. gespeichert.

Mittels eines lesenden Zugriffs auf die Datenstruktur, auf zumindest einzelne Softwareobjekte und/oder davon umfasste Daten können Daten an einem grundsätzlich beliebigen Ort für statistische Zwecke und dergleichen erfasst und gesammelt, also zum Beispiel in einer Datenbasis gespeichert werden, und werden im Rahmen des Betriebs der jeweiligen Maschine sowie im Rahmen der Ausführung des digitalen Zwillings gesammelt bzw. gespeichert, zum Beispiel zu Dokumentationszwecken.

Mittels eines lesenden Zugriffs auf die Datenstruktur, auf zumindest einzelne Softwareobjekte und/oder davon umfasste Daten können Daten an einem grundsätzlich beliebigen Ort für eine Diagnose und/oder Optimierung der jeweiligen Maschine erfasst und gesammelt, also zum Beispiel in einer Datenbasis gespeichert werden, und werden im Rahmen des Betriebs der jeweiligen Maschine sowie im Rahmen der Ausführung des digitalen Zwillings gesammelt bzw. gespeichert.

Mittels eines lesenden Zugriffs auf die Datenstruktur, auf zumindest einzelne Softwareobjekte und/oder davon umfasste Daten können Daten an einem grundsätzlich beliebigen Ort für eine Überwachung der jeweiligen Maschine erfasst und gesammelt, also zum Beispiel in einer Datenbasis gespeichert werden, und werden im Rahmen des Betriebs der jeweiligen Maschine sowie im Rahmen der Ausführung des digitalen Zwillings gesammelt bzw. gespeichert und zur Überwachung ausgewertet.

Mittels eines schreibenden Zugriffs auf die Datenstruktur, auf zumindest einzelne Softwareobjekte und/oder davon umfasste Daten ist eine Fernsteuerung der jeweiligen Maschine möglich und zur Fernsteuerung der Maschine erfolgt im Rahmen des Betriebs der Maschine ein solcher schreibender Zugriff. Zum Beispiel können Fahrbefehle für Achsantriebe ausgelöst werden, um die Maschine in eine bestimmte Konfiguration zu fahren.

Mittels eines schreibenden Zugriffs auf die Datenstruktur, auf zumindest einzelne Softwareobjekte und/oder davon umfasste Daten ist eine Fernkonfiguration der jeweiligen Maschine möglich und zur Fernkonfiguration der Maschine erfolgt im Rahmen des Betriebs der Maschine ein solcher schreibender Zugriff. Zum Beispiel können Achsgrenzwerte verändert werden, um den verfügbaren Verfahrweg einer Achse zu vergrößern oder zu verkleinern. Ebenso können Regelungsparameter geändert werden, um zum Beispiel die Charakteristik einer Lage-, Geschwindigkeits- oder Beschleunigungsregelung eines Achsantriebs zu ändern, und so weiter.

Mittels eines lesenden Zugriffs auf die Datenstruktur, auf zumindest einzelne Softwareobjekte und/oder davon umfasster Daten ist eine Datensicherung (backup) der Datenstruktur, zumindest einzelner Softwareobjekte und/oder davon umfasster Daten möglich und zur Datensicherung solcher Daten erfolgt im Rahmen des Betriebs der Maschine ein solcher lesender Zugriff. Die resultierende Datensicherung wird zum Beispiel in der Cloud gespeichert.

Mittels eines schreibenden Zugriffs auf die Datenstruktur, auf zumindest einzelne Softwareobjekte und/oder davon umfasste Daten ist ein Zurückladen (restore) einer Datensicherung der Datenstruktur, einzelner Softwareobjekte und/oder davon umfasster Daten möglich und zum Zurückladen einer Datensicherung solcher Daten erfolgt im Rahmen des Betriebs der Maschine ein solcher schreibender Zugriff. Die Datensicherung wird dabei zum Beispiel aus der Cloud geladen.

Mittels einer Datensicherung und der Möglichkeit des Zurückladens einer Datensicherung besteht die Möglichkeit, eine Mehrzahl von Konfigurationen zu speichern und vorzuhalten sowie im Wege des Zurückladens genau einer Datensicherung eine spezielle vorherige Konfiguration wiederherzustellen. Auf diese Weise kann schnell, insbesondere auch ohne Anwesenheit am Ort der Maschine, zwischen unterschiedlichen Konfigurationen gewechselt werden.

Die genannten Beispiele sind ausdrücklich nicht abschließend. Es handelt sich vielmehr um aktuell besonders bevorzugte Funktionen. Des Weiteren ist darauf hinzuweisen, dass der beschriebene lesende oder schreibende Zugriff auf die Datenstruktur im Speicher der Steuerungskomponente ausdrücklich auch einen lesenden und/oder schreibenden Zugriff auf darin referenzierte Softwareobjekte einschließt, welche in einem Speicher einer Komponente der jeweiligen Maschine instanziiert sind.

Der digitale Zwilling ist zur automatischen Ausführung solcher und ähnlicher Funktionen bevorzugt in Form eines Computerprogramms realisiert. Die hier vorgeschlagene Neuerung ist damit einerseits auch ein Computerprogramm, ggf. eine Kollektion mehrerer Computerprogramme, mit durch einen Computer ausführbaren Programmcodeanweisungen und andererseits ein Speichermedium mit einem derartigen Computerprogramm, also ein Computerprogrammprodukt mit Programmcodemitteln, sowie schließlich auch eine einer Produktions- oder Werkzeugmaschine in grundsätzlich an sich bekannter Art und Weise zugeordnete Hardware, in deren Speicher als Mittel zur Durchführung des Verfahrens und seiner Ausgestaltungen ein solches Computerprogramm geladen oder ladbar ist.

Das Computerprogramm umfasst Programmcodemittel, insbesondere Programmcodeanweisungen, und ist mittels der Programmcodemittel oder Programmcodeanweisungen dafür bestimmt und eingerichtet, in einer oder zusammen mit einer Produktions- oder Werkzeugmaschine der hier und im Folgenden beschriebenen Art als digitaler Zwilling einer Steuerungskomponente der Produktions- oder Werkzeugmaschine zu fungieren. Das Computerprogramm (das als digitaler Zwilling fungierende Computerprogramm) umfasst Programmcodemittel zum Herstellen einer datentechnischen Verbindung mit der Steuerungskomponente, Programmcodemittel zum Zugriff auf eine interne Datenstruktur der Steuerungskomponente mit davon umfassten Softwareobjekten sowie Programmcodemittel zum schreibenden und/oder lesenden Zugriff auf die Datenstruktur, die Softwareobjekte und von solchen Softwareobjekten umfasste Daten.

Bei speziellen Ausführungsformen der Erfindung umfasst das Computerprogramm Programmcodemittel, um alle Schritte eines jeweiligen Verfahrens zum Betrieb einer Produktions- oder Werkzeugmaschine durchzuführen (Diagnose, Überwachung, Optimierung, Datensicherung etc. - siehe oben), wenn das Computerprogramm als digitaler Zwilling einer Steuerungskomponente einer Produktions- oder Werkzeugmaschine ausgeführt wird. Das Computerprogramm ist dann ggf. auch ein verteiltes Computerprogramm und umfasst einerseits den digitalen Zwilling als Softwarefunktionseinheit und andererseits zum Beispiel eine oder mehrere Applikationen der oben genannten Art zur Diagnose, Überwachung, Optimierung, Datensicherung und dergleichen, wie oben beschrieben.

Ein solches Computerprogramm ist in grundsätzlich an sich bekannter Art und Weise auf einem digitalen Speichermedium gespeichert und dieses umfasst dann elektronisch auslesbare Steuersignale, die so mit einer Produktions- oder Werkzeugmaschine zusammenwirken können, dass ein Verfahren der hier und im Folgenden beschriebenen Art ausgeführt wird.

Wenn im Folgenden Verfahrensschritte oder Verfahrensschrittfolgen beschrieben werden, bezieht sich dies auf Aktionen, die aufgrund des oder eines Computerprogramms oder unter Kontrolle des oder eines Computerprogramms erfolgen. Insofern bedeutet jede Verwendung des Begriffs "automatisch", dass die betreffende Aktion aufgrund des oder eines Computerprogramms oder unter Kontrolle des oder eines Computerprogramms erfolgt.

Anstelle eines Computerprogramms mit einzelnen Programmcodeanweisungen kann die Implementierung des hier und im Folgenden beschriebenen Verfahrens auch oder zumindest zum Teil in Form von Firmware erfolgen. Dem Fachmann ist klar, dass anstelle einer Implementation eines Verfahrens in Software stets auch eine Implementation in Firmware oder in Firm- und Software oder in Firm- und Hardware möglich ist. Daher soll für die hier vorgelegte Beschreibung gelten, dass von dem Begriff Software oder dem Begriff Computerprogramm auch andere Implementationsmöglichkeiten, nämlich insbesondere eine zumindest teilweise Implementation in Firmware oder in Firm- und Software oder in Firm- und Hardware, umfasst sind.

Für die weitere Beschreibung gilt zur Vermeidung unnötiger Wiederholungen, dass Merkmale und Details, die im Zusammenhang mit dem Verfahren zum Betrieb einer Produktions- oder Werkzeugmaschine sowie eventueller Ausgestaltungen beschrieben sind, selbstverständlich auch im Zusammenhang mit und im Hinblick auf eine zur Durchführung des Verfahrens eingerichtete Produktions- oder Werkzeugmaschine und umgekehrt gelten. Dementsprechend kann das Verfahren auch mittels einzelner oder mehrerer Verfahrensmerkmale fortgebildet sein, die sich auf von der Produktions- oder Werkzeugmaschine ausgeführte Verfahrensschritte beziehen, und die Produktions- oder Werkzeugmaschine kann entsprechend auch durch Mittel zur Ausführung von im Rahmen des Verfahrens ausgeführten Verfahrensschritten fortgebildet sein. Folglich ist die nachfolgende Beschreibung stets so zu lesen, dass bezüglich der Offenbarung zu den einzelnen Aspekten der Erfindung (Vorrichtung, Verfahren) stets wechselseitig Bezug genommen wird bzw. werden kann.

Vorteilhafte Ausgestaltungen der Erfindung sind Gegenstand der Unteransprüche. Dabei verwendete Rückbeziehungen innerhalb der Ansprüche weisen auf die weitere Ausbildung des Gegenstandes des in Bezug genommenen Anspruchs durch die Merkmale des jeweiligen abhängigen Anspruchs hin. Sie sind nicht als ein Verzicht auf die Erzielung eines selbständigen, gegenständlichen Schutzes für die Merkmale oder Merkmalskombinationen eines abhängigen Anspruchs zu verstehen. Des Weiteren ist im Hinblick auf eine Auslegung der Ansprüche sowie der Beschreibung bei einer näheren Konkretisierung eines Merkmals in einem abhängigen Anspruch davon auszugehen, dass eine derartige Beschränkung in den jeweils vorangehenden Ansprüchen sowie einer allgemeineren Ausführungsform der gegenständlichen Vorrichtung (Produktions- oder Werkzeugmaschine) oder des gegenständlichen Verfahrens (Verfahren zum Betrieb einer Produktions- oder Werkzeugmaschine) nicht vorhanden ist. Jede Bezugnahme in der Beschreibung auf Aspekte abhängiger Ansprüche ist demnach auch ohne speziellen Hinweis ausdrücklich als Beschreibung optionaler Merkmale zu lesen.

Bei einer Ausführungsform der Maschine (Produktions- oder Werkzeugmaschine) umfassen die Steuerungskomponente und der digitale Zwilling jeweils zumindest eine Datenschnittstelle, wobei die datentechnische Verbindung zwischen dem digitalen Zwilling und der Steuerungskomponente mittels zumindest jeweils zweier paarig zusammengehöriger Datenschnittstellen besteht. Als Datenschnittstellen kommen zum Beispiel Datenschnittstellen mit einem proprietären Protokoll, zum Beispiel dem bei Geräten der Anmelderin verwendeten S7-Kommunikationsprotokoll, bis hin zu Datenschnittstellen für einen remote-Zugriff mittels eines SSH-Netzwerkprotokolls in Betracht.

Bei einer weiteren Ausführungsform der Maschine (Produktions- oder Werkzeugmaschine) ist der digitale Zwilling auf einer als IoT-Edge-Device fungierenden Sekundärhardware implementiert. Ein IoT-Edge-Device verfügt bekanntlich über Mittel zur kommunikativen Verbindung mit der sogenannten Cloud und dort zum Beispiel mit einer Cloud-Plattform. Ein IoT-Edge-Device ermöglicht dem digitalen Zwilling also eine einfache und effiziente Weiterleitung von bei der jeweiligen Steuerungskomponente erfassbaren und im Betrieb erfassten Daten. Dabei kann auf vorhandene Funktionen und Technologien zurückgegriffen werden, ohne dies als Bestandteil des digitalen Zwillings neu implementieren zu müssen.

Bei einer nochmals weiteren Ausführungsform der Maschine (Produktions- oder Werkzeugmaschine) ist der digitale Zwilling auf der Sekundärhardware in einem virtuellen Container (Miocroservice) implementiert. Auf der Sekundärhardware kann damit mehr als ein digitaler Zwilling implementiert sein. Im Falle einer als IoT-Edge-Device fungierenden Sekundärhardware hat damit jeder digitale Zwilling unmittelbar Zugriff auf die Kommunikationsmöglichkeiten zur Cloud, insbesondere zu einer dortigen Cloud-Plattform.

Bei einer vorteilhaften Ausführungsform der Maschine (Produktions- oder Werkzeugmaschine) umfasst diese eine Mehrzahl von Steuerungskomponenten und der digitale Zwilling ist mit genau einer Steuerungskomponente aus der Mehrzahl von Steuerungskomponenten verbindbar und beim Betrieb der Maschine mit genauer einer Steuerungskomponente verbunden. Dann kann der digitale Zwilling spezifisch genau einer Steuerungskomponente zugeordnet sein und über die Zuordnung zu dieser besteht der Zugriff auf deren Datenstruktur und damit die Datenstruktur der gesamten Maschine. Grundsätzlich besteht sogar die Möglichkeit, einen digitalen Zwilling zunächst einer ersten Steuerungskomponente zuzuordnen und später die Zuordnung zu der ersten Steuerungskomponente aufzuheben und den digitalen Zwilling stattdessen einer anderen Steuerungskomponente zuzuordnen, zum Beispiel einer im Slave-Modus arbeitenden Steuerungskomponente.

Eine besonders einfache und effiziente Möglichkeit zur Zuordnung eines digitalen Zwillings zu einer Steuerungskomponente einer jeweiligen Maschine oder genau einer Steuerungskomponente einer jeweiligen Maschine (Verbindung des digitalen Zwillings mit einer Steuerungskomponente oder mit genau einer Steuerungskomponente) besteht darin, dass dem digitalen Zwilling in einem dafür bestimmten Speicherbereich eine Adresse der jeweiligen Steuerungskomponente einprägbar ist und zum Betrieb eingeprägt wird. Als eine derartige Adresse kommt zum Beispiel eine Startadresse eines Speichers der Steuerungskomponente in Betracht.

Bei einer weiteren vorteilhaften Ausführungsform einer Produktions- oder Werkzeugmaschine der hier und im Folgenden beschriebenen Art umfasst der digitale Zwilling eine als IoT-Gateway fungierende Softwarekomponente, welche eine datentechnische Verbindung zumindest einer externen Applikation mit dem IoT-Gateway erlaubt und der externen Applikation einen schreibenden und/oder lesenden Zugriff auf die Datenstruktur im Speicher der Softwarekomponente und die davon umfassten Softwareobjekte erlaubt. Damit ist der digitale Zwilling besonders leicht mit der Cloud oder einer Cloud-Plattform verbindbar. Des Weiteren ist der digitale Zwilling auf diese Weise mit grundsätzlich beliebigen IoT-Applikationen verbindbar. Wenn zum Beispiel aus den oben genannten Funktionen die Funktion der Datensicherung (backup oder backup und restore) exemplarisch herausgegriffen wird - für andere Funktionen gilt dasselbe entsprechend - kann eine solche Funktion grundsätzlich als Bestandteil des digitalen Zwillings oder als mit dem digitalen Zwilling zusammenwirkende Applikation oder IoT-Applikation realisiert werden. Durch die Verfügbarkeit eines IoT-Gateways kann der digitale Zwilling auch für im Moment noch gar nicht bekannte Anwendungsfälle als Möglichkeit zum Zugriff auf eine Steuerungskomponente und die von der Steuerungskomponente umfasste Datenstruktur verwendet werden, sobald eine solche Funktion in Form einer mit dem digitalen Zwilling zusammenwirkenden IoT-Applikation realisiert ist.

Insgesamt ist die hier vorgestellte Erfindung auch ein System, welches einerseits zumindest eine Produktions- oder Werkzeugmaschine mit zumindest einer oder jeweils zumindest einer Steuerungskomponente sowie andererseits zumindest eine Sekundärhardware mit zumindest einem oder jeweils zumindest einem digitalen Zwilling der oder einer Steuerungskomponente der Produktions- oder Werkzeugmaschine umfasst, wobei die oder jede Sekundärhardware eine Verarbeitungseinheit und einen Speicher aufweist, in den ein digitaler Zwilling einer Steuerungskomponente der oder einer Produktions- oder Werkzeugmaschine geladen ist und der im Betrieb der Produktions- oder Werkzeugmaschine durch die Verarbeitungseinheit der Sekundärhardware ausgeführt wird.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Das Ausführungsbeispiel ist nicht als Einschränkung der Erfindung zu verstehen. Vielmehr sind im Rahmen der vorliegenden Offenbarung durchaus auch Ergänzungen und Modifikationen möglich, insbesondere solche, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Es zeigen
- FIG 1: eine Produktions- oder Werkzeugmaschine mit einer davon umfassten Steuerungskomponente und einen der Steuerungskomponente zugeordneten digitalen Zwilling sowie
- FIG 2: eine andere Darstellung der Steuerungskomponente und des digitalen Zwillings mit weiteren Einzelheiten.

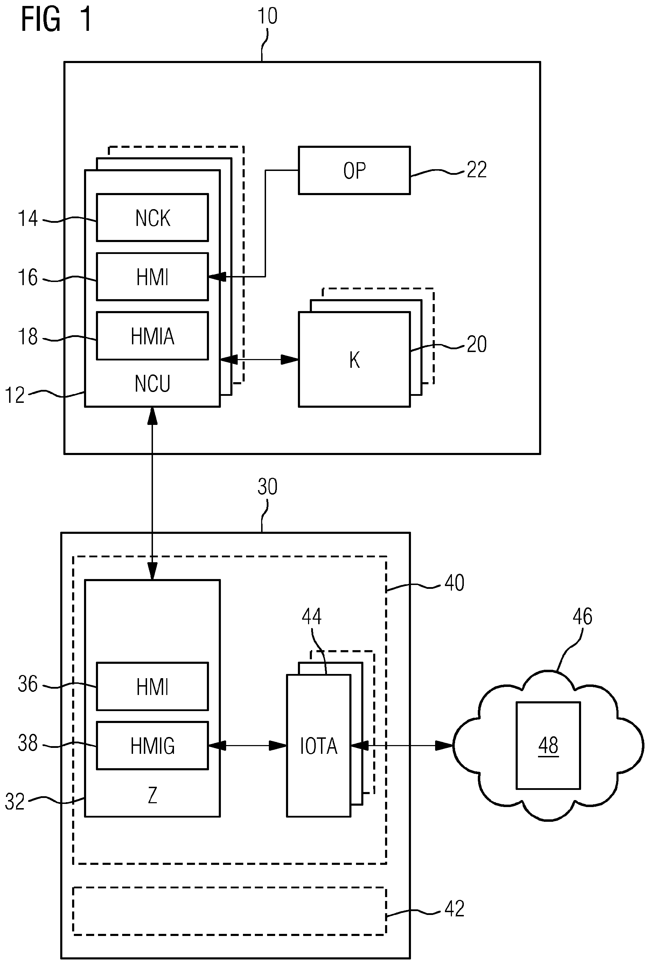

Die Darstellung in FIG 1 zeigt schematisch stark vereinfacht als Beispiel für eine Produktions- oder Werkzeugmaschine eine im Folgenden mitunter auch nur kurz als Maschine 10 bezeichnete Werkzeugmaschine 10 mit zumindest einer davon umfassten Steuerungskomponente (NCU) 12.

Eine solche Steuerungskomponente 12 umfasst in grundsätzlich an sich bekannter Art und Weise zum Beispiel folgende Funktionseinheiten: Eine als Numeric Controller fungierende NC-Einheit 14 (NCK), welche die Bewegungsbefehle für die jeweilige Maschine 10 berechnet, und eine Mensch-Maschine-Schnittstelle (HMI) 16. In einen nicht näher gezeigten Speicher der Steuerungskomponente 12 ist zum Beispiel zumindest eine HMI-Applikation 18 geladen. Die Steuerungskomponente 12 steuert und/oder überwacht in grundsätzlich an sich bekannter Art und Weise alle angeschlossenen und von der Maschine 10 umfassten Komponenten (K) 20, also zum Beispiel Antriebe, Sensoren und dergleichen. Ein solcher Antrieb wirkt zum Beispiel (in grundsätzlich an sich bekannter Art und Weise) auf eine Maschinenachse. Mit der HMI-Schnittstelle 16 der Steuerungskomponente 12 ist in grundsätzlich an sich bekannter Art und Weise zumindest ein Bedien- und Beobachtungsgerät (OP) 22 verbindbar oder im Betrieb verbunden. Eine Maschine 10 kann mehrere Steuerungskomponenten 12 umfassen. Jeder Steuerungskomponente 12 sind dann zur Steuerung und/oder Überwachung einzelne Komponenten 20 zugeordnet.

Eine Steuerungskomponente 12 leistet in grundsätzlich an sich bekannter Art und Weise insbesondere Folgendes: Steuerung und/oder Überwachung aller angeschlossenen Komponenten 20, Implementation der Kommunikation zu den angeschlossenen Komponenten 20, Implementation der internen Datenstrukturen sowie schließlich Abstraktion des Zugriffs auf diese Datenstrukturen und deren Daten für interne Programme, welche auf der Werkzeugmaschine 10 laufen (zum Beispiel eine HMI-Applikation 18).

Gemäß dem hier vorgeschlagenen Ansatz ist auf einer zusätzlichen, aber von der jeweiligen Maschine 10 entweder umfassten oder dieser zugeordneten Hardware 30 (Sekundärhardware 30), zum Beispiel einer als IoT-Edge-Device fungierenden Hardware, ein digitaler Zwilling (Z) 32 der Steuerungskomponente 12 oder einer Steuerungskomponente 12 der jeweiligen Maschine 10 (Produktions- oder Werkzeugmaschine) implementiert.

Der digitale Zwilling 32, also die Software-Entsprechung der realen Steuerungskomponente 12 oder zumindest einer realen Steuerungskomponente 12, umfasst - wie die reale Steuerungskomponente 12, aber jeweils in Software implementiert - eine Mensch-Maschine-Schnittstelle (HMI) 36 und ein IoT-Gateway oder HMI-IoT-Gateway (HMIG) 38. Die Beschreibung des digitalen Zwillings 32 als Software-Entsprechung der realen Steuerungskomponente 12 soll verdeutlichen, dass der digitale Zwilling 32 dieselbe Funktionalität aufweist, wie die jeweilige Steuerungskomponente 12. Der Zwilling 32 umfasst keine Entsprechung einer NC-Einheit 14, hat aber Zugriff auf ein Steuerungsprogramm der (realen) NC-Einheit 14, zum Beispiel über die Datenstruktur 52 sowie ein dort das Steuerungsprogramm repräsentierendes Softwareobjekt 54.

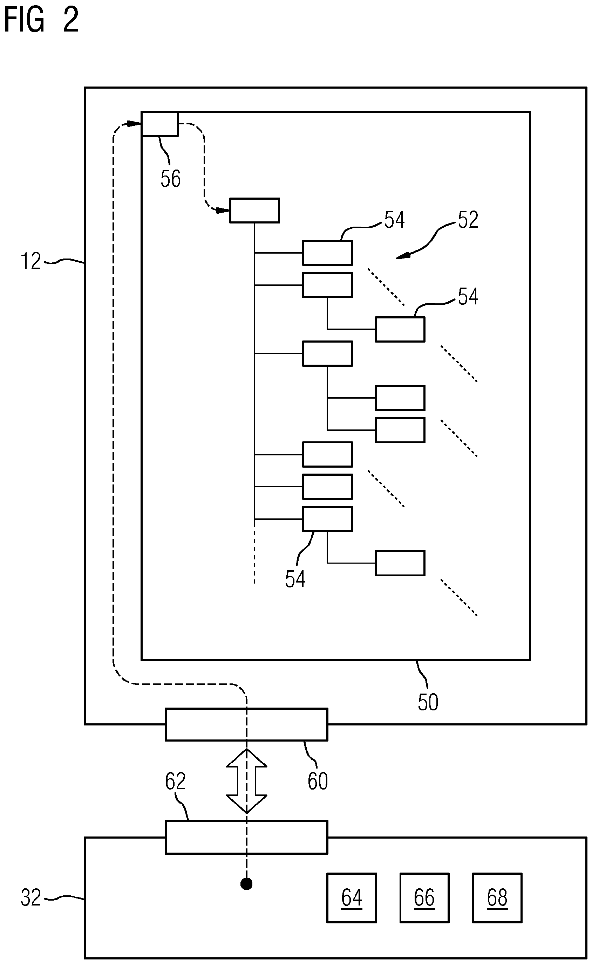

Für die Implementation des digitalen Zwillings 32 auf der Sekundärhardware 30 wird eine entsprechende Softwarekomponente in einen dortigen Speicher 40 geladen. Beim Betrieb ist der digitale Zwilling 32 in den Speicher 40 der Sekundärhardware 30 geladen. Beim Betrieb wird der digitale Zwilling 32 mittels einer von der Sekundärhardware 30 umfassten Verarbeitungseinheit 42 ausgeführt, nämlich einer Verarbeitungseinheit 42 in Form von oder nach Art eines Mikroprozessors. Eine Verarbeitungseinheit in Form von oder nach Art eines Mikroprozessors und ein Speicher der Maschine 10, nämlich jeweils eine Verarbeitungseinheit und ein Speicher für die oder jede Steuerungskomponente 12, sind in der Darstellung in FIG 1 nicht gezeigt, aber selbstverständlich in grundsätzlich an sich bekannter Art und Weise vorhanden (die Darstellung in FIG 2 zeigt den Speicher 50 einer Steuerungskomponente 12).

Die Bezeichnung derjenigen Hardware 30, auf welcher der digitale Zwilling 32 implementiert wird oder ist, als Sekundärhardware 30 rechtfertigt sich im Vergleich zu der jeweiligen Maschine 10, der Primärhardware, weil die Sekundärhardware 30 für die Funktion der Maschine 10, also für die Funktion der Primärhardware, nicht notwendig ist. Zusammen mit der jeweiligen Maschine 10 ergeben sich aber weitergehende Möglichkeiten, die über die Funktion der Maschine 10 hinausgehen, nämlich zum Beispiel die Möglichkeit einer Implementation eines digitalen Zwillings 32. Der Begriff sagt nicht notwendig etwas über einen Ort der Sekundärhardware 30 oder einen räumlichen Abstand der Sekundärhardware 30 von der Maschine 10 aus. Speziell im Falle einer der jeweiligen Maschine 10 zugeordneten, grundsätzlich aber auch bei einer von der jeweiligen Maschine 10 umfassten Sekundärhardware 30 ist diese mit der Maschine 10, insbesondere mit der jeweiligen Steuerungskomponente 12, in grundsätzlich an sich bekannter Art und Weise kommunikativ verbunden, zum Beispiel im Wege einer Ethernet-Verbindung und eines proprietären Netzwerkprotokolls, zum Beispiel TCP. Bei einer der jeweiligen Maschine 10 zugeordneten Sekundärhardware 30 besteht ein (mittels der kommunikativen Verbindung überbrückter) räumlicher Abstand von der Maschine 10, der sich im Bereich von Zentimetern oder wenigen Metern bewegen kann, jedoch auch diverse Kilometer betragen kann (auch Ländergrenzen-übergreifend oder Kontinent-übergreifend; zum Beispiel über das Internet).

Der digitale Zwilling 32 wird mit der realen Werkzeugmaschine 10 und dort der oder einer realen Steuerungskomponente 12 verbunden. Dies erlaubt den vollständigen Zugriff auf sämtliche interne Funktionalitäten der jeweiligen realen Steuerungskomponente 12 und macht diese zum Beispiel für IoT-Applikationen (IOTA) 44 nutzbar. Die Verbindung erfolgt, indem dem digitalen Zwilling 32 die Adresse der realen Steuerungskomponente 12 oder die Adresse genau einer realen Steuerungskomponente aus einer Mehrzahl von von der Maschine 10 umfassten Steuerungskomponenten 12 mitgeteilt wird. Dafür wird die Adresse der realen Steuerungskomponente 12 oder der jeweiligen realen Steuerungskomponente 12 in einen dafür vorgesehenen Speicher des digitalen Zwillings 32 geladen. Sobald der digitale Zwilling 32 die Adresse der realen Steuerungskomponente 12 kennt, insbesondere die IP-Adresse der realen Steuerungskomponente 12, verbindet dieser sich automatisch mit der realen Steuerungskomponente 12 und besitzt Zugriff auf die interne Datenschnittstelle (FIG 2: Bezugsziffer 60) der realen Steuerungskomponente 12. Damit ergibt sich ein voller Zugriff auf die Maschine 10, ohne deren Ressourcen zu belasten, und der digitale Zwilling 32 ist ohne Neukonfiguration der Maschine 10 mit deren Komponenten 20 verbunden.

Der als IoT-Gateway 38 oder als HMI-IoT-Gateway 38 fungierende Teil (Softwareteil) des digitalen Zwillings 32 bildet die Schnittstelle zwischen einer "internen" Kommunikationsschnittstelle des digitalen Zwillings 32 und einer externen Entwicklungsschnittstelle für IoT-Applikationen 44. Damit können auf einer Sekundärhardware 30 nachinstallierbare Funktionserweiterungen für Maschinen 10 realisiert werden, welche die Ressourcen der Maschine 10 nicht/kaum belasten, jedoch agieren können, als wären sie direkt auf der Maschine 10 installiert. Dadurch wird ebenfalls die Anbindung einer Maschine 10 an die sogenannte Cloud 46 und eine dortige Cloud-Plattform 48 möglich, zum Beispiel indem mittels einer IoT-Applikation 44 Daten in die Cloud 46 und zur Cloud-Plattform 48 übertragbar sind und im Betrieb übertragen werden und/oder Daten aus der Cloud 46 und von der Cloud-Plattform 48 empfangbar sind und im Betrieb empfangen werden. Eingangs waren dafür einzelne Beispiele genannt: Datenerfassung, statistische Auswertungen, Diagnose, Optimierung, Fernwartung, Fernkonfiguration, Fernsteuerung, Datensicherung. Es war bereits darauf hingewiesen worden, dass diese Beispiele nicht abschließend sind.

FIG 2 zeigt eine Steuerungskomponente 12 der Maschine 10 (Produktions- oder Werkzeugmaschine) und einen digitalen Zwilling 32 der Steuerungskomponente 12 in einer anderen Darstellung und mit weiteren Details. Die Steuerungskomponente 12 ist entweder die genau eine Steuerungskomponente 12 der Maschine 10 oder eine Steuerungskomponente 12 aus einer Mehrzahl von Steuerungskomponenten 12 der Maschine 10. Bei einer Maschine 10 mit einer Mehrzahl von Steuerungskomponenten 12 kann mehreren Steuerungskomponenten 12 oder jeder Steuerungskomponente 12 jeweils ein digitaler Zwilling 32 zugeordnet sein.

Die Steuerungskomponente 12 umfasst in grundsätzlich an sich bekannter Art und Weise einen Speicher 50, in den zum Beispiel ein (nicht gezeigtes) Steuerungsprogramm geladen ist, welches die Funktionalität der Maschine 10 bestimmt oder zumindest mitbestimmt. Im Speicher 50 der Steuerungskomponente 12 ist auch eine (in der Darstellung in FIG 2 nur schematisch gezeigte) Datenstruktur 52 instanziiert. Die Datenstruktur 52 umfasst zum Beispiel einzelne Softwareobjekte 54 (nur einzelne bezeichnet), welche als (Software-)Repräsentanten der angeschlossenen Komponenten 20 (FIG 1) fungieren. Die Datenstruktur 52 umfasst von jedem als Repräsentant einer angeschlossenen Komponente 20 fungierenden Softwareobjekt 54 zumindest eine Adresse der jeweiligen Daten und/oder Zugriffsfunktionen. Die einzelnen Softwareobjekte 54 können demnach über einzelne Speicher des Komponentenverbunds der jeweiligen Maschine 10 verteilt sein. Ein einzelnes Softwareobjekt 54 oder einzelne Softwareobjekte 54 kann bzw. können zum Beispiel in einem (nicht gezeigten) Speicher einer Komponente 20 instanziiert sein. In diesem Falle umfasst die Datenstruktur 52 im Speicher 50 der Steuerungskomponente 12 gewissermaßen nur die "Hülle" des jeweiligen Softwareobjekts 54.

Die Steuerung und/oder Überwachung der Komponenten 20 durch die Steuerungskomponente 12 erfolgt beim Betrieb der Maschine 10 in grundsätzlich an sich bekannter Art und Weise in Form eines schreibenden und/oder lesenden Zugriffs auf diese Softwareobjekte 54 und die davon umfassten Daten. Zu den Daten solcher Softwareobjekte 54 gehören zum Beispiel auch interne Regelungsdaten oder Echtzeitdaten. Zu einem Softwareobjekt 54, welches zum Beispiel einen Antrieb oder eine Maschinenachse mit einem zu deren Bewegung vorgesehenen Antrieb repräsentiert, gehören zu den Daten des Softwareobjekts 54 zum Beispiel Echtzeit-Positionsdaten sowie Daten, welche eine Regelung der Lage, der Geschwindigkeit und/oder der Beschleunigung des Antriebs bestimmen.

Der Speicher 50 der Steuerungskomponente 12 hat eine Startadresse 56 und die Datenstruktur 52 hat eine eigene Adresse relativ zu dieser Startadresse 56. Mittels der Startadresse 56 ist ein Zugriff auf die Datenstruktur 52 möglich, zum Beispiel mittels der Startadresse 56 und eines konstanten oder bekannten Offsets von der Startadresse 56.

Die Steuerungskomponente 12 umfasst eine Datenschnittstelle 60 und der digitale Zwilling 32 umfasst ebenfalls eine Datenschnittstelle 62. Mittels der beiden Datenschnittstellen 60, 62 (Softwareschnittstellen) sind die Steuerungskomponente 12 und der digitale Zwilling 32 datentechnisch miteinander verbunden. Im Rahmen dieser datentechnischen Verbindung hat der digitale Zwilling 32 Zugriff auf den Speicher 50 der Steuerungskomponente 12. Damit hat der digitale Zwilling 32 auch Zugriff auf die von dem Speicher 50 der Steuerungskomponente 12 umfasste Datenstruktur 52 und die dortigen Softwareobjekte 54 sowie deren Daten.

Bei einer speziellen Ausführungsform des hier vorgeschlagenen Ansatzes ist vorgesehen, dass eine Adresse der Steuerungskomponente 12, also zum Beispiel deren IP-Adresse oder die Startadresse 56 des Speichers 50 der Steuerungskomponente 12, in einen dafür vorgesehenen Speicherbereich des digitalen Zwillings 32 geladen wird. Mittels dieser Adresse und der datentechnischen Verbindung über die beiden Datenschnittstellen 60, 62 hat der digitale Zwilling 32 somit mittelbar oder unmittelbar Zugriff auf den Speicher 50 und die dortige Datenstruktur 52 sowie die davon umfassten Softwareobjekte 54. In der Darstellung in FIG 2 ist dies - vereinfacht - in Form einer vom digitalen Zwilling 32 ausgehenden, gestrichelten Linie über die datentechnische Verbindung zwischen dem digitalen Zwilling 32 und der Steuerungskomponente 12 (Datenschnittstellen 62, 60) und zur Startadresse 56 des Speichers 50 der Steuerungskomponente 12 gezeigt. Wenn als Adresse der Steuerungskomponente 12 deren IP-Adresse in den dafür vorgesehenen Speicherbereich des digitalen Zwillings 32 geladen wird, ermittelt der digitale Zwilling 32 automatisch mit einem Zugriff auf diese IP-Adresse die Startadresse 56 des Speichers 50 der Steuerungskomponente 12. Insoweit wird zum Beispiel bei einem solchen Zugriff eine Konfiguration (Konfigurationsdatensatz) der Steuerungskomponente 12 ausgelesen und der Konfigurationsdatensatz umfasst die Startadresse 56 des Speichers 50.

Der digitale Zwilling 32 ist ein Computerprogramm und umfasst Programmcodemittel, nämlich Programmcodeanweisungen, mittels derer der digitale Zwilling 32 sich in der oben beschriebenen Art und Weise automatisch mit der Steuerungskomponente 12 verbindet und dabei Zugriff auf die Datenstruktur 52 im Speicher 50 der Steuerungskomponente 12 sowie die davon umfassten Softwareobjekte 54 und deren Daten erhält. Die Programmcodeanweisungen gewährleisten, dass das Computerprogramm in einer oder zusammen mit einer Produktions- oder Werkzeugmaschine 10 in der hier und im Folgenden beschriebenen Art und Weise als digitaler Zwilling 32 einer Steuerungskomponente 12 der Produktions- oder Werkzeugmaschine 10 fungiert. Insbesondere umfasst das Computerprogramm, also der digitale Zwilling 32, jeweils nur schematisch gezeigte Programmcodemittel 64 zum automatischen Herstellen einer datentechnischen Verbindung mit der Steuerungskomponente 12, Programmcodemittel 66 zum Zugriff auf die interne Datenstruktur 52 der Steuerungskomponente 12 mit den davon umfassten Softwareobjekten 54 sowie Programmcodemittel 68 zum schreibenden und/oder lesenden Zugriff auf von solchen Softwareobjekten 54 umfasste Daten.

Obwohl die Erfindung im Detail durch das Ausführungsbeispiel näher illustriert und beschrieben wurde, so ist die Erfindung nicht durch das oder die offenbarten Beispiele eingeschränkt und andere Variationen können vom Fachmann hieraus abgeleitet werden, ohne den Schutzumfang der Erfindung zu verlassen.

Einzelne im Vordergrund stehende Aspekte der hier eingereichten Beschreibung lassen sich damit kurz wie folgt zusammenfassen: Angegeben werden eine oftmals kurz nur als Maschine 10 bezeichnete Produktions- oder Werkzeugmaschine 10 mit zumindest einer Steuerungskomponente 12 und einem der zumindest einen Steuerungskomponente 12 zugeordneten digitalen Zwilling 32 sowie ein Verfahren zum Betrieb einer solchen Maschine 10. Der digitale Zwilling 32 ist mit der Steuerungskomponente 12 datentechnisch verbindbar und beim Betrieb der Produktions- oder Werkzeugmaschine 10 mit der Steuerungskomponente 12 datentechnisch verbunden. Der digitale Zwilling 32 hat im Wege der datentechnischen Verbindung Zugriff auf eine interne Datenstruktur 52 der Steuerungskomponente 12. Die Datenstruktur 52 umfasst Softwareobjekte 54, welche an die Produktions- oder Werkzeugmaschine 10 angeschlossene Komponenten 20, insbesondere an die jeweilige Steuerungskomponente 12 angeschlossene Komponenten 20, repräsentieren oder Daten für oder von solchen Komponenten 20 umfassen oder datentechnisch zusammenfassen. Der digitale Zwilling 32 hat im Rahmen des Zugriffs auf die interne Datenstruktur 52 der Steuerungskomponente 12 ebenfalls schreibenden und/oder lesenden Zugriff auf von solchen Softwareobjekten 54 umfasste Daten. Damit ist ein umfassender Zugriff auf die internen Daten einer jeweiligen Produktions- oder Werkzeugmaschine 10 möglich. Im Rahmen dieser Zugriffsmöglichkeit lassen sich viele Funktionen realisieren, welche die Grundfunktion der jeweiligen Produktions- oder Werkzeugmaschine 10 sinnvoll ergänzen (Datenerfassung, statistische Auswertungen, Diagnose, Optimierung, Fernwartung, Fernkonfiguration, Fernsteuerung, Datensicherung etc.).

## Patentansprüche

1. Produktions- oder Werkzeugmaschine (10) mit zumindest einer Steuerungskomponente (12) und einem der zumindest einen Steuerungskomponente (12) zugeordneten digitalen Zwilling (32),
wobei der digitale Zwilling (32) mit der Steuerungskomponente (12) datentechnisch verbindbar und beim Betrieb der Produktions- oder Werkzeugmaschine (10) mit der Steuerungskomponente (12) datentechnisch verbunden ist,
wobei der digitale Zwilling (32) im Wege der datentechnischen Verbindung Zugriff auf eine interne Datenstruktur (52) der Steuerungskomponente (12) hat,
wobei die Datenstruktur (52) Softwareobjekte (54) umfasst, welche an die Produktions- oder Werkzeugmaschine (10) angeschlossene Komponenten (20) repräsentieren und
wobei der digitale Zwilling (32) im Rahmen des Zugriffs auf die interne Datenstruktur (52) der Steuerungskomponente (12) ebenfalls schreibenden und/oder lesenden Zugriff auf von solchen Softwareobjekten (54) umfasste Daten hat.

2. Produktions- oder Werkzeugmaschine (10) nach Anspruch 1,
wobei die Steuerungskomponente (12) eine Datenschnittstelle (60) und der digitale Zwilling (32) eine Datenschnittstelle (62) umfassen und
wobei die datentechnische Verbindung zwischen dem digitalen Zwilling (32) und der Steuerungskomponente (12) mittels der beiden Datenschnittstellen (60, 62) besteht.

3. Produktions- oder Werkzeugmaschine (10) nach Anspruch 1 oder 2,
wobei der digitale Zwilling (32) auf einer als IoT-Edge-Device fungierenden Sekundärhardware (30) implementiert ist.

4. Produktions- oder Werkzeugmaschine (10) nach Anspruch 1, 2 oder 3,
wobei der digitale Zwilling (32) auf der Sekundärhardware (30) in einem virtuellen Container (Miocroservice) implementiert ist.

5. Produktions- oder Werkzeugmaschine (10) nach einem der vorangehenden Ansprüche,
wobei die Produktions- oder Werkzeugmaschine (10) eine Mehrzahl von Steuerungskomponenten (12) aufweist und wobei der digitale Zwilling (32) mit genau einer Steuerungskomponente (12) aus der Mehrzahl von Steuerungskomponenten (12) verbindbar ist.

6. Produktions- oder Werkzeugmaschine (10) nach einem der vorangehenden Ansprüche,
wobei der digitale Zwilling (32) mit genau einer Steuerungskomponente (12) verbindbar ist, indem dem digitalen Zwilling (32) in einem dafür bestimmten Speicherbereich eine Adresse (56) der jeweiligen Steuerungskomponente (12) einprägbar ist.

7. Produktions- oder Werkzeugmaschine (10) nach einem der vorangehenden Ansprüche,
wobei der digitale Zwilling (32) eine als IoT-Gateway (38) fungierende Softwarekomponente umfasst, welche eine datentechnische Verbindung zumindest einer externen Applikation (44) mit dem IoT-Gateway (38) erlaubt und der externen Applikation (44) einen schreibenden und/oder lesenden Zugriff auf die Datenstruktur (52) im Speicher (50) der Softwarekomponente (12) und die davon umfassten Softwareobjekte (54) erlaubt.

8. Computerprogramm mit Programmcodemitteln, welches dafür bestimmt und eingerichtet ist, in einer oder zusammen mit einer Produktions- oder Werkzeugmaschine (10) nach einem der vorangehenden Ansprüche als digitaler Zwilling (32) einer Steuerungskomponente (12) der Produktions- oder Werkzeugmaschine (10) zu fungieren, und welches
Programmcodemittel (64) zum Herstellen einer datentechnischen Verbindung mit der Steuerungskomponente (12),
Programmcodemittel (66) zum Zugriff auf eine interne Datenstruktur (52) der Steuerungskomponente (12) mit davon umfassten Softwareobjekten (54) sowie
Programmcodemittel (68) zum schreibenden und/oder lesenden Zugriff auf von solchen Softwareobjekten (54) umfasste Daten umfasst.

9. Verfahren zum Betrieb einer Produktions- oder Werkzeugmaschine (10) nach einem der Ansprüche 1 bis 7,
wobei mittels des digitalen Zwillings (32) und mittels dessen Möglichkeit zum schreibenden und/oder lesenden Zugriff auf die im Speicher (50) der Steuerungskomponente (12) vorgehaltene Datenstruktur (52), die davon umfassten Softwareobjekte (54) und deren Daten eine Funktion aus einer Menge der folgenden Funktionen ausgeführt wird:
lesender Zugriff auf die Datenstruktur (52), zumindest einzelne Softwareobjekte (54) und/oder davon umfasste Daten zum Zwecke einer Sammlung von Daten an einem entfernten Ort;
lesender Zugriff auf die Datenstruktur (52), zumindest einzelne Softwareobjekte (54) und/oder davon umfasste Daten zum Zwecke einer Sammlung von Daten an einem entfernten Ort für statistische Zwecke;
lesender Zugriff auf die Datenstruktur (52), zumindest einzelne Softwareobjekte (54) und/oder davon umfasste Daten zum Zwecke einer Sammlung von Daten an einem entfernten Ort für eine Diagnose und/oder Optimierung der Produktions- oder Werkzeugmaschine (10);
lesender Zugriff auf die Datenstruktur (52), zumindest einzelne Softwareobjekte (54) und/oder davon umfasster Daten zum Zwecke einer Sammlung von Daten an einem entfernten Ort für eine Überwachung der Produktions- oder Werkzeugmaschine (10) und/oder einer Prozessanalyse eines mittels der Produktions- oder Werkzeugmaschine (10) ausgeführten technischen Prozesses;
schreibender Zugriff auf die Datenstruktur (52), zumindest einzelne Softwareobjekte (54) und/oder davon umfasste Daten zum Zwecke einer Fernsteuerung der Produktions- oder Werkzeugmaschine (10);
schreibender Zugriff auf die Datenstruktur (52), zumindest einzelne Softwareobjekte (54) und/oder davon umfasste Daten zum Zwecke einer Fernkonfiguration der Produktions- oder Werkzeugmaschine (10);
Datensicherung der Datenstruktur (52), zumindest einzelner Softwareobjekte (54) und/oder davon umfasster Daten;
Zurückladen einer Datensicherung der Datenstruktur (52), zumindest einzelner Softwareobjekte (54) und/oder davon umfasster Daten.

10. Computerprogramm, insbesondere nach Anspruch 8, mit Programmcodemitteln, um alle Schritte des Verfahrens gemäß Anspruch 9 durchzuführen, wenn das Computerprogramm als digitaler Zwilling (32) einer Steuerungskomponente (12) einer Produktions- oder Werkzeugmaschine (10) ausgeführt wird.

11. Digitales Speichermedium mit elektronisch auslesbaren Steuersignalen, die so mit einer Produktions- oder Werkzeugmaschine (10) zusammenwirken können, dass ein Verfahren nach Anspruch 9 ausgeführt wird.

12. System umfassend eine Produktions- oder Werkzeugmaschine (10) mit zumindest einer Steuerungskomponente (12) sowie eine Sekundärhardware (30) mit einem digitalen Zwilling (32) der oder einer Steuerungskomponente (12) der Produktions- oder Werkzeugmaschine (10), wobei die Sekundärhardware (30) eine Verarbeitungseinheit (42) und einen Speicher (40) aufweist, in den ein Computerprogramm nach Anspruch 8 oder Anspruch 10 geladen ist, das als digitaler Zwilling (32) einer Steuerungskomponente (12) der Produktions- oder Werkzeugmaschine (10) fungiert und im Betrieb der Produktions- oder Werkzeugmaschine (10) durch die Verarbeitungseinheit (42) der Sekundärhardware (30) ausgeführt wird.
